# EUROPÄISCHE PATENTSCHRIFT

(11) **EP 3 913 267 B1**
(45) Veröffentlichungstag und Bekanntmachung des Hinweises auf die Patenterteilung: **04.09.2024**
(21) Anmeldenummer: 21168152.3
(22) Anmeldetag: 13.04.2021
(51) Int. Cl.: F16K 31/04, F16K 31/53, F16K 37/00, F16H 1/20, F16H 37/04, F16H 57/029, F16H 57/038, F16H 57/039, F16H 57/02

(54) **ANTRIEBSVORRICHTUNG ZUM BETÄTIGEN EINES DREHSCHIEBERS**
ACTUATING DEVICE FOR ACTUATING A ROTARY SLIDE VALVE
DISPOSITIF D'ENTRAÎNEMENT PERMETTANT D'ACTIONNER UNE SOUPAPE À BOISSEAU

(30) Priorität: 30.04.2020 DE 202020102417 U
(43) Veröffentlichungstag der Anmeldung: 24.11.2021
(73) Patentinhaber: ECO Holding 1 GmbH, 97828 Marktheidenfeld (DE)
(72) Erfinder: MUDRA, Alexander, 97828 Marktheidenfeld (DE); DEHRMANN, Sven, 76744 Wörth (DE); MÖHRING, Jens, 72622 Nürtingen (DE)
(74) Vertreter: Keller Schneider Patentanwaltsgesellschaft mbH

(56) Entgegenhaltungen:
- DE-A1- 102012 202 460
- US-A1- 2017 175 925
- US-A1- 2019 024 786
- US-B1- 9 879 596

## Beschreibung

### Technisches Gebiet

Die Erfindung betrifft eine Antriebsvorrichtung zum Betätigen eines Drehschiebers für ein Fluidsystem eines zumindest teilweise elektrisch betriebenen Kraftfahrzeugs. Die Antriebsvorrichtung umfasst einen Elektromotor mit einer Motorabtriebswelle und eine zum Betätigen eines Drehschiebers ausgebildete Drehschieberabtriebswelle.

### Stand der Technik

Derartige Antriebsvorrichtungen zum Betätigen von Drehschiebern sind allgemein bekannt. Sie werden oft elektrisch betrieben, um mit einem Drehschieber beispielsweise I<ühlflüssigl<eiten innerhalb von sogenannten Thermomanagement-Modulen von elektrisch betriebenen Fahrzeugen zu schalten oder umzulenken. Üblicherweise werden die Drehschieber innerhalb von bestimmten Winl<elpositionen durch eine rotatorische Bewegung einer Antriebsvorrichtung hin und her geschaltet. Dadurch ist es beispielsweise möglich, Fluidströme umzuleiten oder Querschnitte von Fluidströmungsl<anälen zu drosseln oder zu erweitern. Drehschieber sind meist in einem Drehschiebergehäuse angeordnet, welches wiederrum Öffnungen zum Ein- und oder Ausströmen von Fluid umfasst.

Die Druckschrift DE 103 28 228 A1 offenbart einen Kompaktantrieb, umfassend zumindest einen Elektromotor, ein Getriebe und einen Umrichter, wobei die Abtriebswelle des Getriebes und die Rotorwelle parallel zueinander angeordnet sind und der Achsabstand zumindest von einer Stirnradstufe des Getriebes oder durch die Ausführung eines Verstellgetriebes bestimmt ist.

Die US 2019/0024786 A1 offenbart eine Schaltal<tuatorbaugruppe zum Bewirken eines Gangwechsels eines Getriebes. Die Schaltal<tuatorbaugruppe umfasst insgesamt sechs Getriebestufen, um die Drehbewegung einer Antriebswelle auf einen Ausgang zu übersetzen.

Problematisch ist im Stand der Technik einerseits, dass das präzise Feststellen der Winkel- oder Drehposition eines derartigen Drehschiebers nur durch aufwändige und kostenintensive Messtechnologie realisierbar ist. Zudem bestehen häufig strenge Kundenanforderungen in Bezug auf die Kompaktheit und den Bauraum derartiger Antriebsvorrichtungen und des Drehschiebers.

Ferner ist es nachteilig, dass der Aufbau der aus dem Stand der Technik bekannten Antriebsvorrichtungen äußerst komplex ist. Diese Komplexität führt unweigerlich auch dazu, dass ein einfaches Austauschen von einzelnen Teilen derartiger Antriebsvorrichtungen nicht möglich ist. Stattdessen werden die Antriebsvorrichtungen gleich vollständig ausgewechselt, wodurch eine zusätzliche Kostensensibilität besteht.

### Darstellung der Erfindung

Aufgabe der Erfindung ist es, eine dem eingangs genannten technischen Gebiet zugehörende Antriebsvorrichtung zu schaffen, welche die oben genannten Nachteile im Stand der Technik überwindet. Insbesondere ist es Aufgabe der vorliegenden Erfindung, eine Antriebsvorrichtung anzugeben, die besonders flach bzw. mit einer geringen Bauhöhe ausgebildet ist. Ferner ist es Aufgabe der vorliegenden Erfindung, eine Antriebsvorrichtung anzugeben, die trotz ihrer kompakten Ausbildung eine möglichst präzise und effiziente Winkel- oder Drehpositionserfassung des zugeordneten Drehschiebers ermöglicht.

Die Lösung der Aufgabe ist durch die Merkmale des Anspruchs 1 definiert. Gemäss der Erfindung weist die Antriebsvorrichtung zum Betätigen eines Drehschiebers für ein Fluidsystem eines zumindest teilweise elektrisch betriebenen Kraftfahrzeugs, einen Elektromotor mit einer Motorabtriebswelle und eine zum Betätigen eines Drehschiebers ausgebildete Drehschieberabtriebswelle auf. Zudem ist die Drehschieberabtriebswelle orthogonal zu der Motorabtriebswelle ausgerichtet und an einem Endbereich der Drehschieberabtriebswelle ist ein Magnet angeordnet. Zusätzlich umfasst die Antriebsvorrichtung eine Sensoreinheit die dazu ausgebildet ist, eine Drehposition des Magneten und damit der Drehschieberabtriebswelle zu erfassen.

Dadurch ergibt sich beispielsweise der technische Vorteil, dass die Antriebsvorrichtung besonders kompakt ausgebildet werden kann. Aufgrund des Elektromotors ergibt sich eine verhältnismäßig hohe Drehzahl bei einem insgesamt geringen Anlaufdrehmoment. Durch die Anordnung des Elektromotors und des Getriebes ist es möglich bei geringem, insbesondere sehr flachem, Bauraum eine geeignete Übersetzung mit reduzierter Drehzahl und erhöhtem Anlaufdrehmoment zu erreichen. Durch das Getriebe kann beispielsweise ein Übersetzungsverhältnis von 1 /24 erreicht werden. Alternativ kann jedoch auch ein größeres oder kleineres Übersetzungsverhältnis wie beispielsweise 1/10, 1/20, 1/30, usw. realisiert werden.

Durch das erhöhte Anlaufdrehmoment ist es zusätzlich möglich, das häufig auftretende Problem des Anhaftens oder Festklebens der Antriebsvorrichtung nach längeren Stehzeiten zu überwinden. Im Betrieb der Antriebsvorrichtung reicht dann wiederum ein geringeres Drehmoment aus. Insgesamt wird ein besonders geringer bzw. flacher Bauraum der Antriebsvorrichtung erreicht, um eine geeignete Übersetzung mit reduzierter Drehzahl und erhöhtem Anlaufdrehmoment zu realisieren.

Gemäß einer vorteilhaften Ausführungsform ist die Sensoreinheit von dem stirnseitigen Ende der Drehschieberabtriebswelle axial beabstandet angeordnet. Dadurch wird beispielsweise der technische Vorteil erreicht, dass die Magnetfeldlinien von der Sensoreinheit besonders präzise erfasst und zur Bestimmung der Drehposition der Drehschieberabtriebswelle und des damit verbundenen Drehschiebers zur Verfügung stehen. Die axiale Anordnung unmittelbar an der Drehschieberabtriebswelle erleichtert die Bestimmung der Drehposition der Drehschieberabtriebswelle. In der Konsequenz können vergleichsweise einfache und damit preiswerte Sensoreinheiten eingesetzt werden.

Um eine möglichst einfache und kompakte Bauweise der Antriebsvorrichtung zu realisieren, ist die Sensoreinheit erfindungsgemäß an einer Steuereinheit der Antriebsvorrichtung angeordnet. Beispielsweise ist die Steuereinheit orthogonal zu und stirnseitig hinter dem Ende der Drehschieberabtriebswelle angeordnet. Vorzugsweise ist die Sensoreinheit an der Steuereinheit vorzugsweise auf einer Leiterplatte angeordnet. Die Sensoreinheit, die Steuereinheit und die Leiterplatte können zusammen auch als Steuereinheit bezeichnet werden.

Erfindungsgemäß wird die Drehschieberabtriebswelle mittels eines gehäuseseitigen Lagers gehalten. Dadurch wird beispielsweise der technische Vorteil erreicht, dass die Montage der Antriebsvorrichtung vereinfacht werden kann. Beispielsweise kann das gehäuseseitige Lager an einem entfernbaren Gehäusedeckel des Gehäuses angeordnet sein. Dies erleichtert die Montage und den Zugriff auf die Bestandteile der Antriebsvorrichtung.

Die Steuereinheit ist erfindungsgemäß zwischen dem stirnseitigen Ende der Drehschieberabtriebswelle und dem gehäuseseitigen Lager angeordnet. Dadurch wird beispielsweise der technische Vorteil erreicht, dass eine besonders kompakte Bauform der Antriebsvorrichtung möglich ist. Auf der vorhergehenden Ausführungsform aufbauend kann das gehäuseseitige Lager beispielsweise an einem entfernbaren Gehäusedeckel des Gehäuses angeordnet sein. Dadurch kann durch das Entfernen des Gehäusedeckels unmittelbar Zugriff auf die Steuereinheit erfolgen.

Um die kompakte und flache Bauform der Antriebsvorrichtung möglichst einfach und funktionssicher zu realisieren, weist die Antriebsvorrichtung ein Getriebe zum Übertragen eines Drehmoments der Motorabtriebswelle auf die Drehschieberabtriebswelle auf, wobei eine erste Zahnradachse und eine zweite Zahnradachse des Getriebes parallel zueinander angeordnet sind und die Drehschieberabtriebswelle die erste Zahnradachse umfasst. In Verbindung mit der Tatsache, dass die erste Zahnradachse und die zweite Zahnradachse an ihren Enden direkt im Gehäuse gelagert sind, wird beispielsweise der technische Vorteil erreicht, dass das Gehäuse besonders einfach im Spritzgussverfahren hergestellt werden kann. Hier ist eine besonders einfache Entformbarkeit gegeben. Beispielsweise ist die Motorabtriebswelle mittels eines Schneckengetriebes mit dem Getriebe verbunden. Dies bringt den zusätzlichen Vorteil eines geräuscharmen Betriebs mit sich. Beispielsweise umfasst das Getriebe ein zweistufiges Stirnradgetriebe.

Nach einer besonders vorteilhaften Ausführungsform ist das gehäuseseitige Lager zum Halten der Drehschieberabtriebswelle zungenförmig ausgebildet, wobei das zungenförmige Lager im Wesentlichen auf einer von der zweiten Zahnradachse abgewandten Seite der ersten Zahnradachse angeordnet ist.

Grundsätzlich weisen zwei miteinander in Eingriff stehende Zahnräder die Eigenschaft auf, dass sie im Betrieb eine radial voneinander wegweisende Kraft erzeugen. Mit anderen Worten wird eine asymmetrische Lagerbelastung im Betrieb zweier miteinander in Eingriff stehender Zahnräder erzeugt. Durch die zungenförmige Ausbildung des Lagers wird lediglich diejenige Seite des Lagers gestützt, die aufgrund der anfallenden Belastung auftritt. Das zungenförmige Lager kann auch als Wandung eines Teilzylinders oder Teilrohrwandung bezeichnet werden. In der Konsequenz braucht die Drehschieberabtriebswelle nur einseitig gelagert zu werden, was die Montage der Antriebsvorrichtung erleichtert.

Gemäß einer zusätzlichen Ausführungsform erstreckt sich das gehäuseseitige Lager zum Halten der Drehschieberabtriebswelle durch eine Kontur der Steuereinheit hindurch. Dadurch wird beispielsweise der technische Vorteil erreicht, dass die Kompaktheit der Antriebsvorrichtung zusätzlich gesteigert wird. Ein weiterer Vorteil liegt darin begründet, dass die mechanische Belastung auf die Lagerung und die damit verbundenen Vibrationen vollständig von der axialen Messung der Drehposition durch die Magnetfeldlinien des Magneten entkoppelt sind. Die axiale Anordnung unmittelbar an der Drehschieberabtriebswelle erleichtert die präzise Bestimmung der Drehposition der Drehschieberabtriebswelle ohne die Ungenauigl<eitseinflüsse des belasteten Lagers. In der Konsequenz können vergleichsweise einfache und damit preiswerte Sensoreinheiten eingesetzt werden.

Um eine möglichst flache Bauform der Antriebsvorrichtung zu ermöglichen, ist der Elektromotor als bürstenloser Schrittmotor mit axial angeordneten Spulen ausgebildet. Derartige Schrittmotoren erreichen zwanzig Vollschritte pro Umdrehung, sind bipolar ansteuerbar und weisen einen streifenweise magnetisierten Rotor auf. Die axiale Anordnung der Phasenspulen zum Rotor ermöglicht einen besonders niedrigen Durchmesser des Elektromotors bzw. einer zugehörigen Motor-Baugruppe. Dabei führt der Feldverlauf radial von einem inneren zu einem äußeren Stator durch den Rotor. Dadurch ist der Elektromotor liegend direkt in die Antriebsvorrichtung bzw. eine entsprechende Trägerbaugruppe integrierbar. Der Elektromotor bzw. Schrittmotor bietet zudem eine besonders hohe Drehzahl bei niedrigem Trägheitsmoment.

Beispielsweise weist der Schrittmotor einen Durchmesser von maximal 25 mm, von maximal 20 mm, von maximal 15 mm oder weniger auf. Aufgrund der Tatsache, dass der Schrittmotor liegend - mit anderen Worten ist die Motorabtriebswelle orthogonal zur Drehschieberabtriebswelle angeordnet - in dem Gehäuse der Antriebsvorrichtung angeordnet ist, kann eine Bauhöhe des Gehäuses der Antriebsvorrichtung 25 mm oder weniger betragen. Um trotz des geringen Durchmessers des Schrittmotors eine ausreichende Leistung an der Drehschieberabtriebswelle sicherstellen zu können, leistet der Schrittmotor zumindest 20 Nmm bei einer Drehzahl von 2000 U/min. Insgesamt kann dadurch ein besonders flaches und kompaktes Gehäuse realisiert werden, welches ein geringes Volumen und ein geringes Gewicht aufgrund geringer Anzahl von Bauteilen aufweist.

Nach einer besonders bevorzugten Ausführungsform weist die Sensoreinheit einen 3D Hall Sensor auf. Dadurch wird beispielsweise der technische Vorteil erreicht, dass vergleichsweise preiswerte Sensoreinheiten mit guter Messqualität eingesetzt werden können.

Gemäß einer weiteren Ausführungsform ist die Steuereinheit orthogonal zur ersten Zahnradachse und zur zweiten Zahnradachse angeordnet. Dadurch wird beispielsweise der technische Vorteil erreicht, dass die kompakte und flache Bauform der Antriebsvorrichtung einfach realisiert werden kann. Zusätzlich kann die Montage besonders einfach erfolgen, da die erste Zahnradachse und die zweite Zahnradachse zueinander parallel ausgerichtet und unmittelbar unterhalb der Steuereinheit angeordnet sind.

Auf den vorhergehenden Ausführungsformen aufbauend kann das gehäuseseitige Lager beispielsweise an einem entfernbaren Gehäusedeckel des Gehäuses angeordnet sein. Dadurch kann durch das Entfernen des Gehäusedeckels unmittelbar Zugriff auf die Steuereinheit und durch Entfernen der Steuereinheit auf das Getriebe und die erste Zahnradachse und die zweite Zahnradachse erfolgen.

Um die gesamte Antriebsvorrichtung einschließlich der Steuereinheit gegen Feuchtigkeit und mechanische Belastung in dem Gehäuse zu schützen, sind die Antriebsvorrichtung und die Steuereinheit in einem fluidisch abgedichteten Gehäuse der Antriebsvorrichtung angeordnet.

Gemäß einer weiteren Ausführungsform weist das Gehäuse eine Trennwand zum fluidischen Abdichten der Steuereinheit und des Elektromotors von einem Fluid durchströmbaren Gehäuseabschnitt auf. Dadurch wird beispielsweise der technische Vorteil erreicht, dass das Gehäuse in einen Trockenbereich und einen Nassbereich aufgeteilt wird. Somit ist beispielsweise die Steuereinheit und der Stator vom Kontakt mit Fluid geschützt. Dies erhöht die Zuverlässigkeit der Antriebsvorrichtung.

In einer vorteilhaften Ausführungsform der Erfindung umfasst die Antriebsvorrichtung eine Schnittstelle zum Verbinden mit einem externen Steuergerät. Dadurch wird beispielsweise der technische Vorteil erreicht, dass kundenspezifische Steuergeräte zum Betätigen der Antriebsvorrichtung eingesetzt werden können. Beispielsweise kann das interne Steuergerät beim Anschluss eines externen Steuergeräts umgangen oder außer Betrieb gesetzt werden. Dadurch wird die Antriebsvorrichtung besonders flexibel für unterschiedliche Kundenfahrzeuge und unterschiedliche Kundenanforderungen nutzbar.

Darauf aufbauend weist das Gehäuse vorzugsweise einen Steckeranschluss zur Aufnahme der Schnittstelle auf. Dadurch wird beispielsweise der technische Vorteil erreicht, dass die flexibel einsetzbare Schnittstelle gegen äußere Einflüsse geschützt ist. Neben Feuchtigkeitsschutz und Schutz vor Verunreinigungen kann mittels des Steckeranschlusses eine mechanische Befestigung mit einem externen Steuergerät erfolgen, wodurch die Schnittstelle abgesichert wird. Dadurch werden die Funktion und die Zuverlässigkeit der Antriebsvorrichtung zusätzlich verbessert.

Nach einer zusätzlichen Ausführungsform ist das Getriebe nasslaufend ausgebildet. Dadurch wird beispielsweise der technische Vorteil erreicht, dass das Getriebe vollständig in dem Nassbereich der Antriebsvorrichtung angeordnet werden kann. Beispielsweise kann das vollständige Getriebe aus Kunststoff hergestellt sein. Dadurch ist es zusätzlich möglich die Antriebsvorrichtung besonders preiswert herzustellen.

Eine nicht beanspruchte alternative Variante umfasst eine Antriebsvorrichtung zum Betätigen eines Drehschiebers für ein Fluidsystem eines zumindest teilweise elektrisch betriebenen Kraftfahrzeugs mit einem Elektromotor mit einer Motorabtriebswelle, einem mindestens zwei Getriebestufen aufweisenden Getriebe zum Übertragen eines Drehmoments der Motorabtriebswelle auf eine zum Betätigen eines Drehschiebers ausgebildete Drehschieberabtriebswelle. Das Getriebe weist eine Getriebe-Eingangswelle auf, welche orthogonal zu der Motorabtriebswelle angeordnet ist, wobei die Drehschieberabtriebswelle orthogonal zu der Getriebe-Eingangswelle angeordnet ist. Dadurch ergibt sich beispielsweise der technische Vorteil, dass die Antriebsvorrichtung besonders kompakt ausgebildet werden kann. Aufgrund des Elektromotors ergibt sich eine verhältnismäßig hohe Drehzahl bei einem insgesamt geringen Anlaufdrehmoment. Durch die Anordnung des Elektromotors und des Getriebes ist es möglich bei geringem, insbesondere sehr flachem, Bauraum eine geeignete Übersetzung mit reduzierter Drehzahl und erhöhtem Anlaufdrehmoment zu erreichen. Durch das Getriebe kann beispielsweise ein Übersetzungsverhältnis von 1 /24 erreicht werden. Alternativ kann jedoch auch ein größeres oder kleineres Übersetzungsverhältnis wie beispielsweise 1/10, 1/20, 1/30, usw. realisiert werden. Durch das erhöhte Anlaufdrehmoment ist es zusätzlich möglich, das häufig auftretende Problem des Anhaftens oder Festklebens der Antriebsvorrichtung nach längeren Stehzeiten zu überwinden. Im Betrieb der Antriebsvorrichtung reicht dann wiederum ein geringeres Drehmoment aus.

Nach einer vorteilhaften Weiterbildung ist die Drehschieberabtriebswelle orthogonal zur Motorabtriebswelle angeordnet. Dadurch ist ein besonders geringer bzw. flacher Bauraum der Antriebsvorrichtung sichergestellt, um eine geeignete Übersetzung mit reduzierter Drehzahl und erhöhtem Anlaufdrehmoment zu erreichen.

Nach einer weiteren Ausführungsform ist der Elektromotor als ein Schrittmotor, insbesondere als ein Klauenpolmotor, ausgebildet. Besonders bevorzugt ist der Elektromotor ein axialer 1<lauenpol-Schrittmotor mit axial angeordneten Phasenspulen. Ein solcher axialer 1<lauenpol-Schrittmotor erreicht zwanzig Vollschritte pro Umdrehung, ist bipolar ansteuerbar und weist einen streifenweise magnetisierten Rotor auf. Die axiale Anordnung der Phasenspulen zum Rotor ermöglicht einen besonders niedrigen Durchmesser des Elektromotors bzw. einer zugehörigen Motor-Baugruppe. Dabei führt der Feldverlauf radial von einem inneren zu einem äußeren Stator durch den Rotor. Dadurch ist der Elektromotor liegend direkt in die Antriebsvorrichtung bzw. eine entsprechende Trägerbaugruppe integrierbar. Der Elektromotor bzw. Schrittmotor bietet zudem eine besonders hohe Drehzahl bei niedrigem Trägheitsmoment.

Gemäß einer besonderen Ausführungsform sind die Motorabtriebswelle und die Getriebe-Eingangswelle mittels eines ersten Kegelradgetriebes verbunden ausgebildet. Das Kegelradgetriebe ermöglicht eine sehr einfache und platzsparende Umlenkung des Drehmoments des Elektromotors in eine zu der Motorabtriebswelle verschiedene, insbesondere orthogonale Richtung.

Nach einer zusätzlichen Weiterbildung weist das Getriebe eine Getriebe-Ausgangswelle auf, welche mittels eines zweiten Kegelradgetriebes mit der Drehschieberabtriebswelle verbunden ausgebildet ist. Hier ermöglicht das Kegelradgetriebe eine sehr einfache und platzsparende Umlenkung des Drehmoments der Getriebe-Ausgangswelle in eine zu dieser verschiedenen, insbesondere orthogonalen Richtung. Bevorzugt ist die Getriebe-Ausgangswelle dabei parallel zu der Getriebe-Eingangswelle ausgebildet. Auf diese Weise ist der flache Bauraum der Antriebsvorrichtung besonders einfach erreichbar.

Im Übrigen können das erste und/oder das zweite Kegelradgetriebe als ein Schneckenradgetriebe ausgebildet sein, um das jeweilige Drehmoment umzulenken. Es ergeben sich ähnliche Vorteile.

Nach einer besonders vorteilhaften Ausführungsform umfasst das Getriebe einen mehrstufigen Stirnradgetriebesatz, welcher zwischen der Getriebe-Eingangswelle und der Getriebe-Ausgangswelle angeordnet ist. Dadurch wird beispielsweise der technische Vorteil erreicht, dass eine besonders flexible Umsetzung des Drehmoments des Elektromotors in einem begrenzten Bauraum erfolgen kann.

Nach einer weiteren Ausführungsform, ist die radiale Ausdehnung eines größten Zahnrads des Stirnradgetriebesatzes kleiner oder gleich einem Durchmesser des Elektromotors. Dadurch wird beispielsweise der technische Vorteil erreicht, dass die Bauhöhe des Elektromotors begrenzt und die Ausdehnung der Antriebsvorrichtung somit insgesamt minimiert werden kann.

Beispielsweise weist die Drehschieberabtriebswelle einen Magnet zum Erfassen einer Drehposition der Drehschieberabtriebswelle auf. Dabei ist der Magnet bezüglich einer Rotationsachse R der Drehschieberabtriebswelle vorzugsweise asymmetrisch angeordnet. Dadurch wird beispielsweise der technische Vorteil erreicht, dass eine korrespondierende Asymmetrie der Magnetfeldlinien entsteht. Beispielsweise wird der Magnet außermittig an der Drehschieberabtriebswelle angeordnet.

Nach einer zusätzlichen Weiterbildung ist dem Magnet eine Sensoreinheit zum Erfassen einer Winkelposition der Drehschieberabtriebswelle zugeordnet. Dadurch wird beispielsweise der technische Vorteil erreicht, dass die Magnetfeldlinien von der Sensoreinheit erfasst und zur Bestimmung der Drehposition der Drehschieberabtriebswelle und des damit verbundenen Drehschiebers zur Verfügung stehen.

Gemäß einer weiteren Ausführungsform weist die Antriebsvorrichtung eine Steuereinheit auf, welche parallel zu einer Ebene angeordnet ist, welche durch die Motorabtriebswelle und die Getriebe-Eingangswelle vorgegeben ist. Dadurch wird beispielsweise der technische Vorteil erreicht, dass die Positionierung der Drehschieberabtriebswelle und damit die Drehposition des Drehschiebers durch Ansteuern des Getriebes bestimmt werden können. Beispielsweise ist die Steuereinheit axial hinter dem Ende der Drehschieberabtriebswelle angeordnet. Im Übrigen ist die Sensoreinheit mit der Steuereinheit vorzugsweise auf einer Leiterplatte angeordnet. Die Sensoreinheit, die Steuereinheit und die Leiterplatte können zusammen auch als Steuereinheit bezeichnet werden.

Nach einer besonders vorteilhaften Ausführungsform, sind die Leiterplatte und der Stirnradgetriebesatz derart angeordnet, dass deren geringste gemeinsame Ausdehnung kleiner oder gleich dem Durchmesser des Elektromotors ist. Dadurch wird beispielsweise der technische Vorteil erreicht, dass die durch den Durchmesser des Elektromotors festgelegt minimale Bauhöhe der Antriebsvorrichtung nicht überschritten wird. Bedarfsweise weist die Leiterplatte dabei eine Aussparung für ein Zahnrad des Getriebes auf, wenn für dieses Zahnrad ohne diese Aussparung nicht genügend Bauraum zur Verfügung steht.

Nach einer weiteren Ausführungsform sind die Antriebsvorrichtung und die Steuereinheit in einem fluidisch abgedichteten Gehäuse angeordnet. Dadurch wird beispielsweise der technische Vorteil erreicht, dass die gesamte Antriebsvorrichtung einschließlich der Steuereinheit gegen Feuchtigkeit und mechanische Belastung in dem Gehäuse geschützt sind.

Vorteilhafterweise umfasst die Antriebsvorrichtung eine Schnittstelle zum Verbinden mit einem externen Steuergerät. Dadurch wird beispielsweise der technische Vorteil erreicht, dass kundenspezifische Steuergeräte zum Betätigen der Antriebsvorrichtung eingesetzt werden können. Beispielsweise kann das interne Steuergerät beim Anschluss eines externen Steuergeräts umgangen oder außer Betrieb gesetzt werden. Dadurch wird die Antriebsvorrichtung besonders flexibel für unterschiedliche Kundenfahrzeuge und unterschiedliche Kundenanforderungen nutzbar.

Darauf aufbauend weist das Gehäuse vorzugsweise einen Steckeranschluss zur Aufnahme der Schnittstelle auf. Dadurch wird beispielsweise der technische Vorteil erreicht, dass die flexibel einsetzbare Schnittstelle gegen äußere Einflüsse geschützt ist. Neben Feuchtigkeitsschutz und Schutz vor Verunreinigungen kann mittels des Steckeranschlusses eine mechanische Befestigung mit einem externen Steuergerät erfolgen, wodurch die Schnittstelle abgesichert wird. Dadurch werden die Funktion und die Zuverlässigkeit der Antriebsvorrichtung zusätzlich verbessert.

Gemäß einer weiteren Ausführungsform weist das Gehäuse eine Trennwand zum fluidischen Abdichten der Steuereinheit und des Elektromotors von einem Fluid durchströmbaren Gehäuseabschnitt auf. Dadurch wird beispielsweise der technische Vorteil erreicht, dass das Gehäuse in einen Trockenbereich und einen Nassbereich aufgeteilt wird. Somit ist beispielsweise die Steuereinheit und der Stator vom Kontakt mit Fluid geschützt. Dies erhöht die Zuverlässigkeit der Antriebsvorrichtung.

Gemäß einer besonderen Weiterbildung ist das Getriebe nasslaufend ausgebildet. Dadurch wird beispielsweise der technische Vorteil erreicht, dass das Getriebe vollständig in dem Nassbereich der Antriebsvorrichtung angeordnet werden kann. Beispielsweise kann das vollständige Getriebe aus Kunststoff hergestellt sein. Dadurch ist es zusätzlich möglich die Antriebsvorrichtung besonders preiswert herzustellen.

### Kurze Beschreibung der Zeichnungen

Die zur Erläuterung des Ausführungsbeispiels der Erfindung verwendeten Zeichnungen zeigen:
- Fig. 1: eine perspektivische Teilansicht einer Antriebsvorrichtung;
- Fig. 2: eine perspektivische Teilansicht der Antriebsvorrichtung aus Fig.1 mit einer Steuereinheit und einem Steckeranschluss;
- Fig. 3: eine perspektivische Seitenansicht des Details III. aus Fig. 1;
- Fig. 4: die Teilansicht von Fig. 2 mit einem angedeuteten Drehschiebergehäuse;
- Fig. 5: eine perspektivische Seitenansicht des Drehschiebergehäuses;
- Fig. 6: eine Explosionsdarstellung einer erfindungsgemäßen Ausführungsform;
- Fig. 7: eine Schnittansicht einer erfindungsgemäßen Ausführungsform; und
- Fig. 8: eine Teilansicht der erfindungsgemäßen Antriebsvorrichtung.

Grundsätzlich sind in den Figuren gleiche Teile mit gleichen Bezugszeichen versehen.

### Wege zur Ausführung der Erfindung

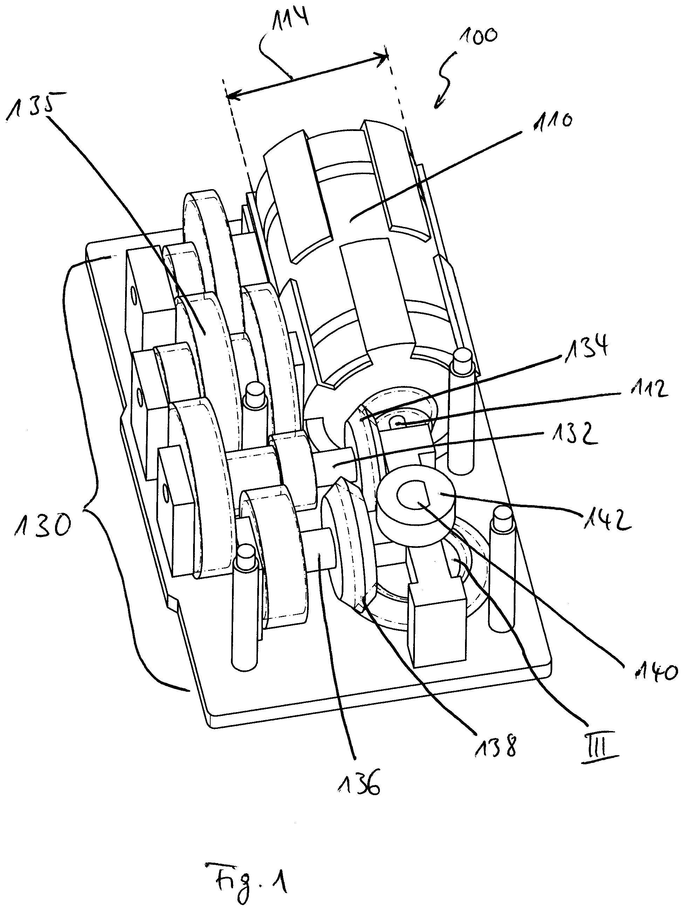

Die Fig. 1 zeigt eine perspektivische Teilansicht einer erfindungsgemäßen Antriebsvorrichtung 100 zum Betätigen eines Drehschiebers für ein Fluidsystem eines zumindest teilweise elektrisch betriebenen Kraftfahrzeugs. Die Antriebsvorrichtung 100 weist einen Elektromotor 110 auf, aus dem sich eine Motorabtriebswelle 112 erstreckt. Der Elektromotor 110 hat eine zylindrische Grundform mit einem Durchmesser 114. Außerdem weist die Antriebsvorrichtung 100 ein Getriebe 130 auf, welches die Motorabtriebswelle 112 mit der Drehschieberabtriebswelle 140 verbindet. Das Getriebe 130 umfasst eine Getriebe-Eingangswelle 132, welche mittels eines ersten Kegelradgetriebes 134 mit der Motorabtriebswelle 112 verbunden ist. Ferner umfasst das Getriebe 130 einen Stirnradgetriebesatz 135, welcher mit der Getriebe-Eingangswelle 132 und einer parallel angeordneten Getriebe-Ausgangswelle 136 verbunden ist. Der Stirnradgetriebesatz 135 umfasst mehrere Zahnradstufen, um eine vergleichsweise hohe Drehzahl des Elektromotors 110 bei geringem Drehmoment auf eine geringere Drehzahl der Drehschieberabtriebswelle 140 bei erhöhtem Drehmoment zu übertragen. Über die Getriebe-Ausgangswelle 136 und ein ebenfalls zum Getriebe 130 zugehöriges zweites Kegelradgetriebe 138 ist das Getriebe 130 mit der Drehschieberabtriebswelle 140 verbunden.

Der Elektromotor 110 ist hier als 1<lauenpol-Schrittmotor ausgebildet. Um die Bauhöhe der Antriebsvorrichtung 100 möglichst gering zu halten, ist die radiale Ausdehnung des größten Zahnrads des Stirnradgetriebesatzes 135 kleiner oder gleich dem Durchmesser 114 des Elektromotors 110. Die Getriebe-Eingangswelle 132 des Getriebes 130 ist orthogonal zu der Motorabtriebswelle 112 angeordnet. Die Drehschieberabtriebswelle 140 ist sowohl zu der Getriebe-Eingangswelle 132 als auch zu der Getriebe-Ausgangswelle 136 orthogonal angeordnet. An einem Ende der Drehschieberabtriebswelle 140 befindet sich ein Magnet 142, dessen Drehposition mittels einer Sensoreinheit 152 (nicht gezeigt) erfasst werden kann.

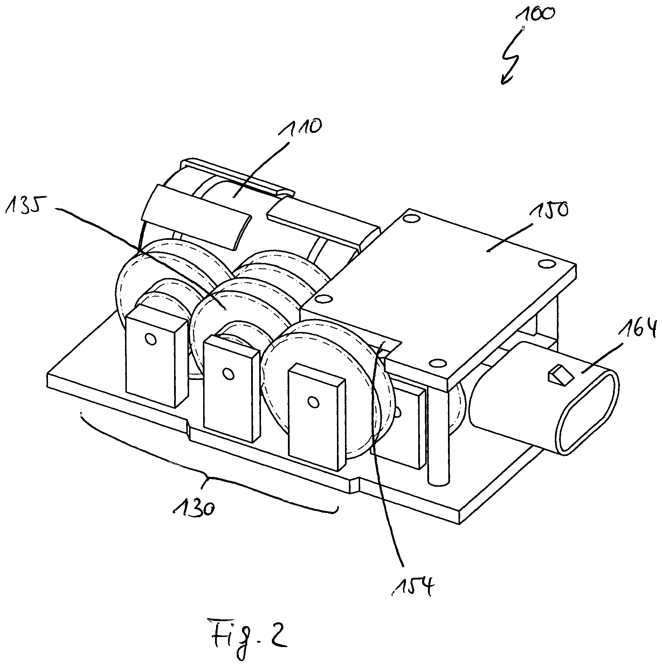

Die Fig. 2 zeigt eine erweiterte Teilansicht der erfindungsgemäßen Antriebsvorrichtung 100. Aus Fig. 1 bekannte Komponenten der Antriebsvorrichtung 100 sind der Elektromotor 110 und das Getriebe 130 mit dem Stirnradgetriebesatz 135. Zusätzlich weist die Antriebsvorrichtung 100 eine Steuereinheit 150 mit einer (nicht dargestellten) Sensoreinheit 152 auf. Die Sensoreinheit 152 ist vorzugsweise direkt oberhalb des Magneten 142 angeordnet. Dabei ist die Steuereinheit 150 mittels einer Schnittstelle 162 (nicht gezeigt) mit einem Steckeranschluss 164 verbunden. Die Steuereinheit 150 ist zudem parallel zu einer Ebene angeordnet, welche durch die Motorabtriebswelle 112 (siehe Fig. 1) und die Getriebe-Eingangswelle 132 (siehe Fig. 1) vorgegeben ist. Die Steuereinheit 150 umfasst eine Aussparung 154, um die Steuereinheit 150 möglich flachbauend an der Antriebsvorrichtung 100 anzuordnen.

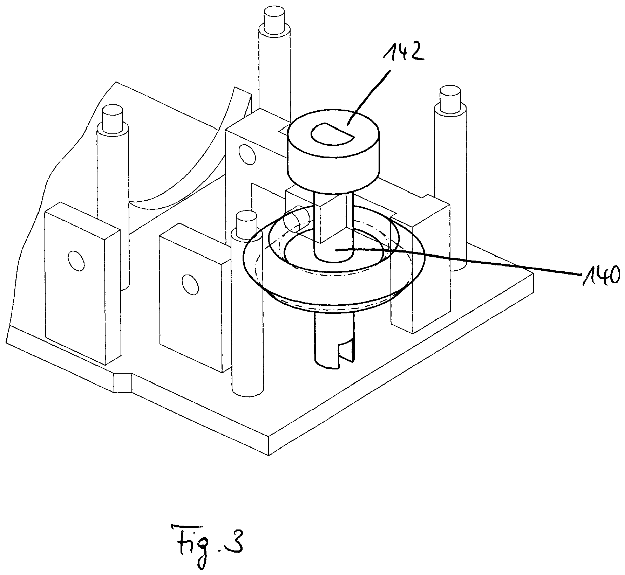

Die Fig. 3 zeigt eine Teilansicht der erfindungsgemäßen Antriebsvorrichtung 100, in welcher die Drehschieberabtriebswelle 140 sichtbar ist. Die Drehschieberabtriebswelle 140 weist den Magnet 142 auf, dessen Drehposition von der zu Fig. 2 erwähnten Sensoreinheit 152 erkannt werden kann, um eine Winkelposition der Drehschieberabtriebswelle 140 zu erfassen. Insgesamt ist es somit möglich, die aktuelle Drehposition des Drehschiebers (nicht gezeigt) zu erfassen und zu steuern.

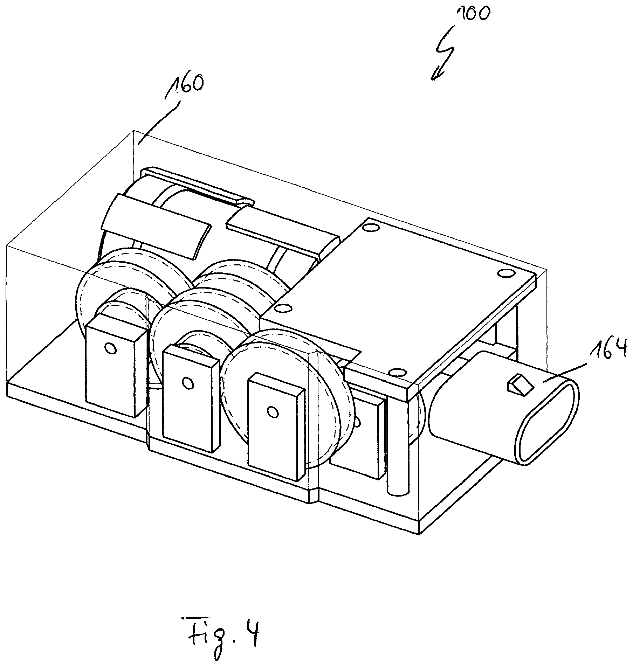

Die Fig. 4 zeigt die Teilansicht aus Fig. 2 zusätzlich mit einem angedeuteten Gehäuse 160, welches die Antriebsvorrichtung 100 umschließt. Somit sind auch hier alle Komponenten aus Fig. 2 dargestellt. In dem Gehäuse160 sind die Antriebsvorrichtung 100 mit der Steuereinheit 150 fluidisch abgedichtet angeordnet. Das Gehäuse 160 kann zudem eine Trennwand aufweisen, um die Steuereinheit 150 und den Elektromotor 110 von einem Fluid durchströmbaren Gehäuseabschnitt fluidisch abzutrennen, beispielsweise wenn das Getriebe 130 nasslaufend ausgebildet ist.

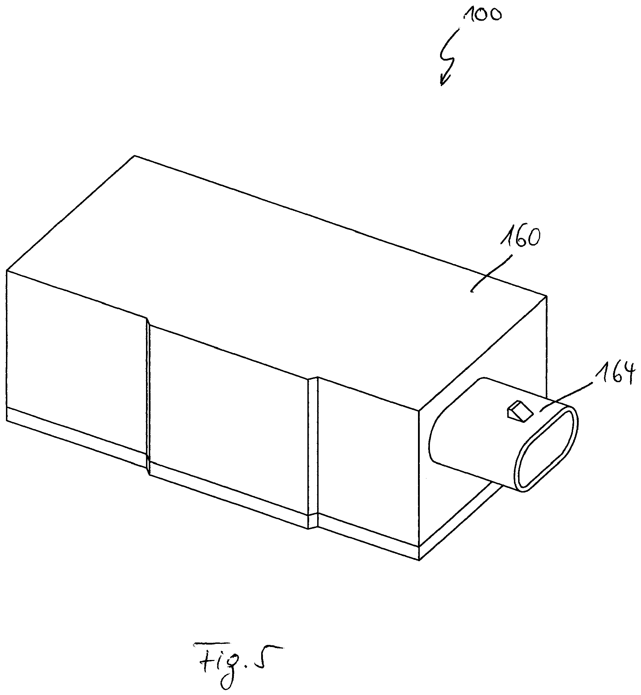

Die Fig. 5 zeigt das Gehäuse 160 mit dem extern angeordneten Steckeranschluss 164. Insbesondere sind in der Beschreibung vielfache Einzelaspekte der Antriebsvorrichtung 100 beschrieben worden. Dabei sind die Einzelaspekte für sich genommen, getrennt von anderen Aspekten beanspruchbar.

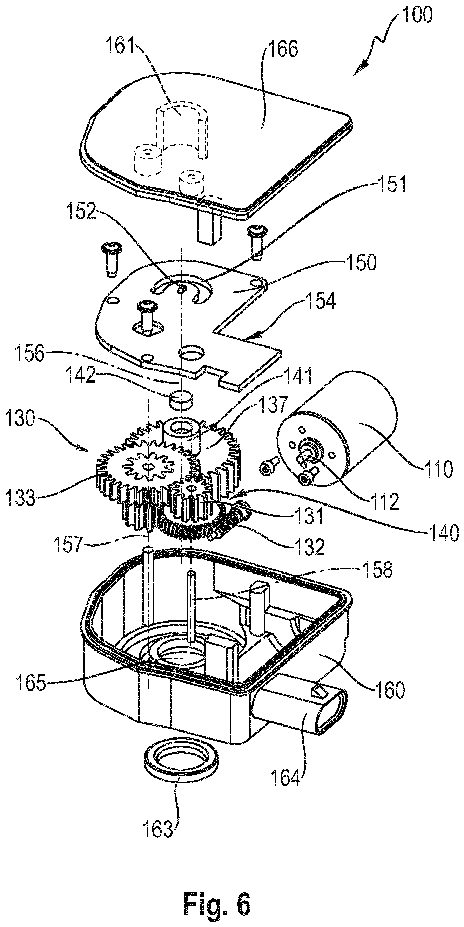

Die Fig. 6 zeigt eine Explosionsdarstellung einer erfindungsgemäßen Ausführungsform einer Antriebsvorrichtung 100.

Die Antriebsvorrichtung 100 hat einen Elektromotor 110 in Form eines bürstenlosen Schrittmotors. Der Elektromotor 110 liegt flach in einem fluidisch abgedichteten Gehäuse 160 und ist platzsparend neben einem Getriebe 130 zum Übertragen eines Drehmoments einer Motorabtriebswelle 112 auf eine Drehschieberabtriebswelle 140 angeordnet. Die Motorabtriebswelle 112 ist mittels einer Getriebe-Eingangswelle 132 in Form eines Schneckenantriebs mit dem Getriebe 130 verbunden.

Die Drehschieberabtriebswelle 140 ist orthogonal zu der Motorabtriebswelle 112 ausgerichtet, wodurch eine besonders flache Bauart der Antriebsvorrichtung 110 möglich ist.

An einem Endbereich 141 der Drehschieberabtriebswelle 140 ist ein Magnet 142 mittig angeordnet, um mit Hilfe einer Sensoreinheit 152 eine Drehposition des Magneten 142 und damit der Drehschieberabtriebswelle 140 zu erfassen. Die Sensoreinheit 152 ist von dem stirnseitigen Ende der Drehschieberabtriebswelle 140 axial beabstandet, um eine präzise Messung zu ermöglichen. Die Sensoreinheit 152 ist hierfür unmittelbar oberhalb des Endbereichs 141 der Drehschieberabtriebswelle 140 an dem Magnet 142 angeordnet.

Das Getriebe 130 verfügt zusätzlich zur Getriebe-Eingangswelle 132 über drei weitere Zahnräder 131, 133, 137 deren Zahnradachsen 156, 157, 158 parallel zueinander ausgerichtet sind. Die Motorabtriebswelle 112 ist mittels der Getriebe-Eingangswelle 132 mit dem dritten Zahnrad 131 verbunden. Über den Schneckenantrieb wird hierbei das Drehmoment des Elektromotors 110 auf das dritte Zahnrad 131 übertragen, dessen dritte Zahnradachse 158 orthogonal zur Motorabtriebswelle 112 ausgebildet ist.

Das dritte Zahnrad 131 ist mit dem zweiten Zahnrad 133 verbunden, wobei dem zweiten Zahnrad 133 die zweite Zahnradachse 157 zugeordnet ist. Das zweite Zahnrad 133 ist mit dem ersten Zahnrad 137 verbunden, wobei dem ersten Zahnrad 137 die ersten Zahnradachse 156 zugeordnet ist. Die Drehschieberabtriebswelle 140 ist mit dem ersten Zahnrad 137 verbunden und trägt an einem oberen Ende den Magnet 142, um mit Hilfe der Sensoreinheit 152 die Drehposition des Magneten 142 und damit der Drehschieberabtriebswelle 140 zu erfassen. Am unteren Ende des ersten Zahnrades 137 kann ein Drehschieber (nicht gezeigt) angeordnet werden, um diesen zwischen bestimmten Winkelpositionen hin und her zu schalten. Hierbei wird die Drehschieberabtriebswelle 140 durch eine Gehäuseöffnung 165 geführt. Zusätzlich ist das erste Zahnrad 137 mittels einem radialen Dichtelement 163 gegenüber der Gehäuseöffnung 165 geführt.

Seitlich am Gehäuse 160 befindet sich ein Steckeranschluss 164, welche eine Schnittstelle 162 (nicht gezeigt) zum Verbinden mit einem externen Steuergerät aufweist.

Oberhalb des Getriebes 130 befindet sich eine Steuereinheit 150 in Form einer Leiterplatte, welche die Sensoreinheit 152 exakt oberhalb des Magnets 152 trägt. Eine Aussparung 154 der Steuereinheit 150 bietet eine räumlich optimierte und kompakte Bauform, da die Steuereinheit 150 und der Elektromotor 110 näher aneinander angeordnet werden können und der Abstand zwischen Steuereinheit 150 und dem stirnseitigen Ende der Zahnräder 137, 133, 131 zusätzlich reduziert werden kann.

Oberhalb der Steuereinheit 150 ist ein Gehäusedeckel 166 gezeigt, welcher ein gehäuseseitiges Lager 161 zum Halten der Drehschieberabtriebswelle 140 aufweist. Das gehäuseseitige Lager 161 zum Halten der Drehschieberabtriebswelle 140 ist zungenförmig oder als Wandung eines Teilzylinders ausgebildet. Durch die zungenförmige Ausbildung des gehäuseseitigen Lagers 161 wird eine asymmetrische Lagerbelastung im Betrieb zweier miteinander in Eingriff stehender Zahnräder aufgenommen. Die asymmetrische Lagerbelastung entsteht dadurch, dass zwei miteinander in Eingriff stehende Zahnräder - hier das erste Zahnrad 137 und das zweite Zahnrad 133 - die Eigenschaft aufweisen, im Betrieb radial voneinander wegweisende Kräfte zu erzeugen. Die zungenförmige Ausbildung des Lagers wird lediglich auf derjenigen Seite eingesetzt, die aufgrund der anfallenden Belastung auftritt. Somit wird die Drehschieberabtriebswelle 140 nur einseitig gelagert, was die Montage der Antriebsvorrichtung 100 erleichtert.

Die Steuereinheit 150 ist zwischen dem stirnseitigen Ende der Drehschieberabtriebswelle 140 und dem Gehäusedeckel 166 angeordnet. Damit das gehäuseseitige Lager 161 die Drehschieberabtriebswelle 140 halten kann, wird sie durch eine Kontur 151 der Steuereinheit 150 hindurchgeführt.

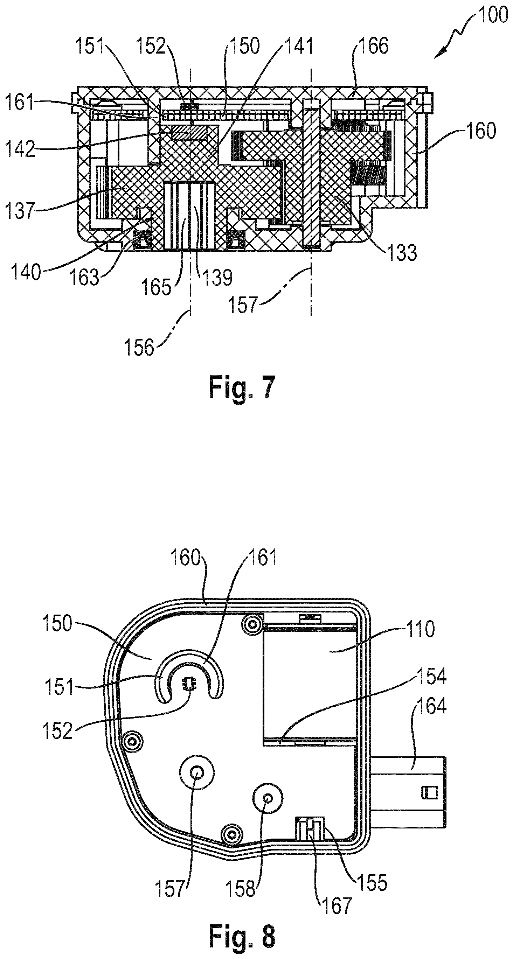

Die Fig. 7 zeigt eine Schnittansicht einer erfindungsgemäßen Ausführungsform der Antriebsvorrichtung 100. Die Antriebsvorrichtung 100 einschließlich der Steuereinheit 150 befinden sich innerhalb des fluidisch abgedichteten Gehäuses 160 und werden durch den Gehäusedeckel 166 verschlossen. Die Schnittansicht zeigt das erste Zahnrad 137 mit der dem ersten Zahnrad 137 zugeordneten ersten Zahnradachse 156. Von dem Gehäusedeckel 166 aus erstreckt sich das gehäuseseitige Lager 161, welches zum Halten der Drehschieberabtriebswelle 140 und damit des ersten Zahnrades 137 ausgebildet ist. Hierbei erstreckt sich das gehäuseseitige Lager 161 durch die Kontur 151 der Steuereinheit 150 hindurch. An der Steuereinheit 150 ist die Sensoreinheit 152 angeordnet, welche die Drehposition des Magneten 142 erfassen kann. Der Magnet 142 ist an einem Endbereich der Drehschieberabtriebswelle 141 angeordnet, wodurch von der Drehposition des Magneten 142 über die Drehposition der Drehschieberabtriebswelle 140 auf die Position eines Drehschiebers (nicht gezeigt) geschlossen werden kann. Ein Drehschieber lässt sich an einer an der Drehschieberabtriebswelle 140 angeordneten Drehschieberschnittstelle 139 befestigen. Die Drehschieberabtriebswelle 140 ist mittels des Dichtelements 163 gegenüber dem Gehäuse 160 abgedichtet.

Mit dem ersten Zahnrad 137 in Eingriff steht das zweite Zahnrad 133, welchem die zweite Zahnradachse 157 zugeordnet ist. Die erste Zahnradachse 156 und die zweite Zahnradachse 157 des Getriebes 130 sind parallel zueinander angeordnet. Die Drehschieberabtriebswelle 140 umfasst die erste Zahnradachse 156. Die Steuereinheit 150 ist sowohl zur ersten Zahnradachse 156 als auch zur zweiten Zahnradachse 157 orthogonal ausgerichtet.

Die Fig. 8 zeigt eine Teilansicht der erfindungsgemäßen Antriebsvorrichtung 100 in einer Draufsicht. Am Gehäuse 160 befindet sich der seitlich angeordnete Steckeranschluss 164. Innerhalb des Gehäuses 160 befindet sich die Steuereinheit 150 mit der Aussparung 154, in welche der Elektromotor 110 eingebracht ist. Durch die Kontur 151 erstreckt sich das zungenförmige gehäuseseitige Lager 161. Innerhalb der Kontur ist die Sensoreinheit 152 auf der Steuereinheit 150 angeordnet. Zusätzlich sind die zweite Zahnradachse 157 und die dritte Zahnradachse 158 zusehen. In einer weiteren Aussparung 155 der Steuereinheit 150 ist ein Motorabtriebswellenlager 167 gezeigt.

### Bezugszeichenliste

| | |
|---|---|
| 100 | Antriebsvorrichtung |
| 110 | Elektromotor |
| 112 | Motorabtriebswelle |
| 114 | Durchmesser |
| 130 | Getriebe |
| 131 | Drittes Zahnrad |
| 132 | Getriebe-Eingangswelle |
| 133 | Zweites Zahnrad |
| 134 | Erstes Kegelradgetriebe |
| 135 | Stirnradgetriebe |
| 136 | Getriebe-Ausgangswelle |
| 137 | Erstes Zahnrad |
| 138 | Zweites-Kegel radgetriebe |
| 139 | Drehschieberschnittstelle |
| 140 | Drehschieberabtriebswelle |
| 141 | Endbereich Drehschieberabtriebswelle |
| 142 | Magnet |
| 150 | Steuereinheit |
| 151 | Kontur |
| 152 | Sensoreinheit |
| 154 | Aussparung |
| 155 | Aussparung |
| 156 | Erste Zahnradachse |
| 157 | Zweite Zahnradachse |
| 158 | Dritte Zahnradachse |
| 160 | Gehäuse |
| 161 | Gehäuseseitiges Lager |
| 162 | Schnittstelle |
| 163 | Dichtelement |
| 164 | Steckeranschluss |
| 165 | Gehäuseöffnung |
| 166 | Gehäusedeckel |
| 167 | Motorabtriebswellenlager |
| R | Rotationsachse |

## Patentansprüche

1. Antriebsvorrichtung (100) zum Betätigen eines Drehschiebers für ein Fluidsystem eines zumindest teilweise elektrisch betriebenen Kraftfahrzeugs, die Folgendes aufweist:
einen Elektromotor (110) mit einer Motorabtriebswelle (112),
eine zum Betätigen eines Drehschiebers ausgebildete Drehschieberabtriebswelle (140),
wobei die Drehschieberabtriebswelle (140) orthogonal zu der Motorabtriebswelle (112) ausgerichtet und an einem Endbereich (141) der Drehschieberabtriebswelle (140) ein Magnet (142) angeordnet ist,
ein Getriebe (130) zum Übertragen eines Drehmoments der Motorabtriebswelle (112) auf die Drehschieberabtriebswelle (140), wobei eine erste Zahnradachse (156) und eine zweite Zahnradachse (157)
des Getriebes (130) parallel zueinander angeordnet sind und
die Drehschieberabtriebswelle (140) die erste Zahnradachse (156) umfasst,
eine Sensoreinheit (152), die dazu ausgebildet ist eine Drehposition des Magneten (142) und damit der Drehschieberabtriebswelle (140) zu erfassen, wobei die Drehschieberabtriebswelle (140) mittels eines gehäuseseitigen Lagers (161) gehalten ist, und die Sensoreinheit (152) an einer Steuereinheit (150) der Antriebsvorrichtung (100) angeordnet ist, **dadurch**
**gekennzeichnet, dass**
die Steuereinheit (150) zwischen einem stirnseitigen Ende der Drehschieberabtriebswelle (140) und dem gehäuseseitigen Lager (161) angeordnet ist.

2. Antriebsvorrichtung (100) nach Anspruch 1, **dadurch gekennzeichnet, dass** die Sensoreinheit (152) von dem stirnseitigen Ende der Drehschieberabtriebswelle (140) axial beabstandet angeordnet ist.

3. Antriebsvorrichtung (100) nach Anspruch 1 oder 2, **dadurch gekennzeichnet, dass** das gehäuseseitige Lager (161) zum Halten der Drehschieberabtriebswelle (140) zungenförmig ausgebildet ist, wobei das zungenförmige Lager (161) im Wesentlichen auf einer von der zweiten Zahnradachse (157) abgewandten Seite der ersten Zahnradachse (156) angeordnet ist.

4. Antriebsvorrichtung (100) nach einem der vorstehenden Ansprüche, **dadurch gekennzeichnet, dass** sich das gehäuseseitige Lager (161) zum Halten der Drehschieberabtriebswelle (140) durch eine Kontur (151) der Steuereinheit (150) hindurch erstreckt.

5. Antriebsvorrichtung (100) nach einem der vorstehenden Ansprüche, **dadurch gekennzeichnet, dass** der Elektromotor (110) als bürstenloser Schrittmotor mit axial angeordneten Spulen ausgebildet ist.

6. Antriebsvorrichtung (100) nach einem der vorstehenden Ansprüche, **dadurch gekennzeichnet, dass** die Sensoreinheit (152) einen 3D Hall Sensor aufweist.

7. Antriebsvorrichtung (100) nach einem der vorstehenden Ansprüche, **dadurch gekennzeichnet, dass** die Steuereinheit (150) orthogonal zur ersten Zahnradachse (156) und zur zweiten Zahnradachse (157) angeordnet ist.

8. Antriebsvorrichtung (100) nach einem der vorstehenden Ansprüche, **dadurch gekennzeichnet, dass** die Antriebsvorrichtung (100) und die Steuereinheit (150) in einem fluidisch abgedichteten Gehäuse (160) derAntriebsvorrichtung (100) angeordnet sind.

9. Antriebsvorrichtung (100) nach Anspruch 8, **dadurch gekennzeichnet, dass** das Gehäuse (160) eine Trennwand zum fluidischen Abdichten der Steuereinheit (150) und des Elektromotors (110) von einem von Fluid durchströmbaren Gehäuseabschnitt aufweist.

10. Antriebsvorrichtung (100) nach einem der vorstehenden Ansprüche, **dadurch gekennzeichnet, dass** die Antriebsvorrichtung (100) eine Schnittstelle (162) zum Verbinden mit einem externen Steuergerät aufweist.

11. Antriebsvorrichtung (100) nach einem der vorstehenden Ansprüche, **dadurch gekennzeichnet, dass** das Getriebe (130) vollständig in einem Nassbereich der Antriebsvorrichtung angeordnet ist.

## Claims

1. Drive unit (100) for actuating a rotary slide for a fluid system of an at least partially electrically operated motor vehicle, comprising:
an electric motor (110) with a motor output shaft (112),
a rotary slide output shaft (140) configured to actuate a rotary slide,
wherein the rotary slide output shaft (140) is aligned orthogonally to the motor output shaft (112) and a magnet (142) is arranged at an end region (141) of the rotary slide output shaft (140),
a transmission (130) for transmitting a torque of the motor output shaft (112) to the rotary slide output shaft (140), wherein a first gear axis (156) and a second gear axis (157) of the transmission (130) are arranged parallel to each other and the rotary slide output shaft (140) comprises the first gear axis (156),
a sensor unit (152) which is configured to detect a rotational position of the magnet (142) and thus of the rotary slide output shaft (140), wherein the rotary slide output shaft (140) is held by means of a bearing (161) on the housing side, and the sensor unit (152) is arranged on a control unit (150) of the drive unit (100), **characterized in that**
the control unit (150) is arranged between an end face end of the rotary slide output shaft (140) and the bearing (161) on the housing side.

2. Drive unit (100) according to claim 1, **characterized in that** the sensor unit (152) is arranged at an axial distance from the end face end of the rotary slide output shaft (140).

3. Drive unit (100) according to claim 1 or 2, **characterized in that** the bearing (161) on the housing side for holding the rotary slide output shaft (140) is tongue-shaped, wherein the tongue-shaped bearing (161) is arranged essentially on a side of the first gear axis (156) facing away from the second gear axis (157).

4. Drive unit (100) according to one of the preceding claims, **characterized in that** the bearing (161) on the housing side for holding the rotary slide output shaft (140) extends through a contour (151) of the control unit (150).

5. Drive unit (100) according to one of the preceding claims, **characterized in that** the electric motor (110) is configured as a brushless stepper motor with axially arranged coils.

6. Drive unit (100) according to one of the preceding claims, **characterized in that** the sensor unit (152) comprises a 3D Hall sensor.

7. Drive unit (100) according to one of the preceding claims, **characterized in that** the control unit (150) is arranged orthogonally to the first gear axis (156) and to the second gear axis (157).

8. Drive unit (100) according to one of the preceding claims, **characterized in that** the drive unit (100) and the control unit (150) are arranged in a fluidically sealed housing (160) of the drive unit (100).

9. Drive unit (100) according to claim 8, **characterized in that** the housing (160) comprises a partition wall for fluidically sealing the control unit (150) and the electric motor (110) from a housing section through which fluid can flow.

10. Drive unit (100) according to one of the preceding claims, **characterized in that** the drive unit (100) comprises an interface (162) for connection to an external control unit.

11. Drive unit (100) according to one of the preceding claims, **characterized in that** the transmission (130) is arranged completely in a wet area of the drive unit.

## Revendications

1. Dispositif d'entraînement (100) pour actionner une vanne rotative pour un système de fluide d'un véhicule à moteur au moins partiellement électrique, comprenant :
un moteur électrique (110) avec un arbre de sortie de moteur (112),
un arbre de sortie de vanne rotative (140) configuré pour actionner une vanne rotative,
dans lequel l'arbre de sortie de vanne rotative (140) est orienté orthogonalement à l'arbre de sortie de moteur (112) et un aimant (142) est disposé sur une partie d'extrémité (141) de l'arbre de sortie de vanne rotative (140),
une transmission (130) pour transmettre un couple de l'arbre de sortie de moteur (112) à l'arbre de sortie de vanne rotative (140), dans laquelle un premier axe d'engrenage (156) et un deuxième axe d'engrenage (157) de la transmission (130) sont disposés parallèlement l'un à l'autre, et l'arbre de sortie de vanne rotative (140) comprenant le premier axe d'engrenage (156),
une unité de capteur (152) qui est configurée pour détecter une position de rotation de l'aimant (142) et donc de l'arbre de sortie de vanne rotative (140), l'arbre de sortie de vanne rotative (140) étant maintenu au moyen d'un palier (161) côté boîtier, et l'unité de capteur (152) étant disposée sur une unité de commande (150) du dispositif d'entraînement (100), **caractérisé en ce que**
l'unité de commande (150) est disposée entre une extrémité frontale de l'arbre de sortie de vanne rotative (140) et le palier (161) situé du côté du boîtier.

2. Dispositif d'entraînement (100) selon la revendication 1, **caractérisé en ce que** l'unité de capteur (152) est disposée à une distance axiale de l'extrémité frontale de l'arbre de sortie de vanne rotative (140).

3. Dispositif d'entraînement (100) selon la revendication 1 ou 2, **caractérisé en ce que** le palier (161) côté boîtier destiné à maintenir l'arbre de sortie de vanne rotative (140) est en forme de languette, dans lequel le palier (161) en forme de languette est disposé sensiblement sur un côté du premier axe d'engrenage (156) opposé au deuxième axe d'engrenage (157).

4. Dispositif d'entraînement (100) selon l'une des revendications précédentes, **caractérisé en ce que** le palier (161) côté boîtier destiné à maintenir l'arbre de sortie de vanne rotative (140) s'étend à travers un contour (151) de l'unité de commande (150).

5. Dispositif d'entraînement (100) selon l'une des revendications précédentes, **caractérisé en ce que** le moteur électrique (110) est un moteur pas à pas sans balai avec des bobines disposées axialement.

6. Dispositif d'entraînement (100) selon l'une des revendications précédentes, **caractérisé en ce que** l'unité de capteur (152) comprend un capteur 3D Hall.

7. Dispositif d'entraînement (100) selon l'une des revendications précédentes, **caractérisé en ce que** l'unité de commande (150) est disposée orthogonalement au premier axe d'engrenage (156) et au deuxième axe d'engrenage (157).

8. Dispositif d'entraînement (100) selon l'une des revendications précédentes, **caractérisé en ce que** le dispositif d'entraînement (100) et l'unité de commande (150) sont disposés dans un boîtier (160) étanche aux fluides du dispositif d'entraînement (100).

9. Dispositif d'entraînement (100) selon la revendication 8, **caractérisé en ce que** le boîtier (160) comporte une cloison permettant d'assurer l'étanchéité aux fluides de l'unité de commande (150) et du moteur électrique (110) par rapport à une partie du boîtier configurée pour pouvoir être traversée par un fluide.

10. Dispositif d'entraînement (100) selon l'une des revendications précédentes, **caractérisé en ce que** le dispositif d'entraînement (100) comporte une interface (162) de connexion à un appareil de commande externe.

11. Dispositif d'entraînement (100) selon l'une des revendications précédentes, **caractérisé en ce que** la transmission (130) est entièrement disposée dans une zone humide du dispositif d'entraînement.
